# EUROPÄISCHE PATENTSCHRIFT

(11) **EP 0 492 324 B1**
(45) Veröffentlichungstag und Bekanntmachung des Hinweises auf die Patenterteilung: **28.06.1995**
(21) Anmeldenummer: 91121461.7
(22) Anmeldetag: 14.12.1991
(51) Int. Cl.: B60H 1/00, G05D 23/27, G05D 23/19

(54) **Einrichtung zur Regelung der Innenraumtemperatur von Kraftfahrzeugen**
Temperature control device for the passenger compartment of a motor vehicle
Dispositif de réglage de la température de l'habitacle d'un véhicule automobile

(30) Priorität: 20.12.1990 DE 4040846
(43) Veröffentlichungstag der Anmeldung: 01.07.1992
(73) Patentinhaber: Hella KG Hueck & Co., 59552 Lippstadt (DE)
(72) Erfinder: Wöhler, Jürgen, W-4780 Lippstadt 4 (DE)

(56) Entgegenhaltungen:
- US-A- 4 961 462
- US-A- 5 031 830
- PATENT ABSTRACTS OF JAPAN vol. 4, no. 164 (M-41)(646) 14. November 1980 & JP-A-55 114 611 (NIPPON DENSO) 4. September 1980
- PATENT ABSTRACTS OF JAPAN vol. 14, no. 140 (M-950)(4083) 16. März 1990 & JP-A-2 006 213 (CALSONIC CORP.) 10. Januar 1990
- PATENT ABSTRACTS OF JAPAN vol. 13, no. 400 (M-867)(3748) 6. September 1989 & JP-A-1 145 219 (MAZDA) 7. Juni 1987
- PATENT ABSTRACTS OF JAPAN vol. 10, no. 336 (M-535)26. Juni 1986 & JP-A-61 139 507 (DIESEL KIKI CO LTD) 14. NOVEMBER 1986
- PATENT ABSTRACTS OF JAPAN vol. 5, no. 2 (M-49)27. Oktober 1980 & JP-A-55 137 441 (NIPPON DENSO CO LTD) 9. Januar 1981

## Beschreibung

Die Erfindung betrifft eine Einrichtung zur Regelung der Innenraumtemperatur von Kraftfahrzeugen gemäß den Merkmalen des Oberbegriffs des Anspruchs 1.

Aus der europäischen Patentanmeldung 0 381 846 A2 ist eine Einrichtung zur Regelung der Innenraumtemperatur von Kraftfahrzeugen bekannt, die einen Regler aufweist, der mit mindestens einem Innen- und/oder Außentemperaturfühler, mit einem Solltemperaturgeber, mit mindestens einem Sonnensensor und mit mindestens einem Stellglied zur Beeinflussung der dem Innenraum zugeführten Wärmemenge verbunden ist.

Bei dieser Einrichtung wird das einer Sonneneinstrahlung proportionale Signal des Sonnensensors unmittelbar auf mindestens einen der Analog-Eingänge des Reglers aufgeschaltet, wobei mindestens ein Solarsensor vorgesehen ist, dem mindestens ein Bewertungswiderstand parallel geschaltet ist, wobei diese mindestens eine Parallelschaltung mit einem Spannungsteiler verbunden ist, der mit dem Regler verknüpft ist.

Bei einer solchen Einrichtung erweist sich als nachteilig, daß, obwohl das Signal von dem Sonnensensor in seiner Spannung an die Regelung der Innenraumtemperatur angepaßt wird, direkt der Regelung zugeführt wird. Aufgrund der geringen Zeitkonstanten von einigen Millisekunden des Reglers werden Schwankungen der Meßgröße, das heißt, des hier vorliegenden Signals von dem Sonnensensor, die z. B. auftreten, wenn das Kraftfahrzeug an Bäumen, Häusern usw. vorbeifährt, unverzögert der Regelung zugeführt, die jedoch aufgrund der relativ großen thermischen Zeitkonstanten des Fahrzeuginnenraums eine Ausregelung dieser auftretenden Schwankungen nicht erreichen kann. Es entstehen somit Schwankungen in der Temperaturregelung des Innenraums des Fahrzeugs, die dem Klimaempfinden der Passagiere nicht entsprechen. Bei der vorliegenden Einrichtung erweist sich somit als besonders nachteilig, daß Störgrößen speziell bedingt durch kurzzeitige Schwankungen des Signals von dem Sonnensensor nicht herausgefiltert werden und somit eine unstetige unruhige Regelung der Innenraumtemperatur bewirkt wird, die eine für das Wohlbefinden der Passagiere wichtige Systemruhe bei der Regelung nicht liefern kann.

Aus der US-A-4 961 462 ist zudem bekannt, daß der mindestens eine Sonnensensor mit einer Bewertungseinrichtung verbunden ist, die das Signal des Sonnensensors verzögert der Regelung zuführt. Die Bewertungseinrichtung weist dabei ein Verzögerungsglied mit einer vorgegebenen Zeitkonstanten auf. Bei dieser Ausführung erweist sich als nachteilig, daß unterschiedliche Zeitabhängigkeiten bei der Bewertung des Signals von dem Sonnensensor nicht berücksichtigt werden können, so daß der Einfluß der Sonneneinstrahlung auf die Innenraumtemperatur, der von thermischen Zeit konstanten des Fahrgastraums und dem Klimaempfinden der Passagiere abhängt, nicht oder nur unzureichend ausgeglichen wird.

Aus dem Patent Abstract of Japan, vol. 13, no. 400 (M-867) (3748) 06.09.89 und JP-A-1 145 219 ist bekannt, unterschiedliche Zeitkonstanten bei der Bewertung eines Signals von einem Sonnensensor wirksam zu schalten. Hierbei erweist sich jedoch als nachteilig, daß in Reihe geschaltete Berechnungseinrichtungen verwendet werden müssen und eine gleichzeitige Berücksichtigung des Einflusses der Sonnenstrahlen auf die Innenraumtemperatur in Abhängigkeit von thermischen Zeitkonstanten des Fahrgastraums und dem Klimaempfinden der Passagiere mit dieser Einrichtung nicht möglich ist und eine Umschaltung des Zeitglieds auf unterschiedliche Zeitkonstanten notwendig ist.

Aus dem Patent Abstract of Japan, vol. 5, no. 2 (M-49) 27.10.80 und JP-A-55 137 441 ist ein Verfahren zum Regeln der Innenraumtemperatur von Kraftfahrzeugen bekannt, bei dem ein Sonnensensor Verwendung findet, der als eine Fotodiode ausgebildet ist.

Der Erfindung liegt die Aufgabe zugrunde, eine Einrichtung zur Regelung der Innenraumtemperatur von Kraftfahrzeugen zu schaffen, bei der bei Verwendung eines Sonnensensors das Signal des Sonnensensors bei allen Betriebsbedingungen des Kraftfahrzeugs derart der Regelung zugeführt wird, daß der Einfluß der Sonneneinstrahlung auf die Innenraumtemperatur in Abhängigkeit von der thermischen Zeitkonstanten des Fahrgastraums und dem Klimaempfinden der Passagiere bestmöglich ausgeglichen wird.

Die Aufgabe wird durch die Merkmale des Anspruchs 1 gelöst.

Es ist von Vorteil, daß der mindestens eine Sonnensensor mit einer Bewertungseinrichtung verbunden ist, die das Signal des Sonnensensors verzögert der Regelung zuführt, weil somit auf einfache und kostengünstige weise der Einfluß der Sonneneinstrahlung auf die Innenraumtemperatur, insbesondere bedingt durch kurzzeitige Schwankungen der Sonneneinstrahlung auf den Sonnensensor und das von dem Sonnensensor gebildete Signal, die sich als Störgrößen herausstellen, in Abhängigkeit von der thermischen Zeitkonstanten des Fahrgastraums und dem Klimaempfinden der Passagiere bestmöglich herausgefiltert und ausgeglichen wird, so daß eine stetige gleichmäßige Regelung der Innenraumtemperatur nicht nur dann erreicht wird, wenn sich der Innenraum aufgrund von Sonneneinstrahlung kontinuierlich aufheizt oder abkühlt, sondern auch dann, wenn kurzzeitige Schwankungen der Sonneneinstrahlung auftreten.

In diesem Zusammenhang erweist sich als besonders vorteilhaft, daß die Bewertungseinrichtung ein Verzögerungsglied mit einer Zeitkonstanten aufweist, weil somit die vorher beschriebenen Vorteile besonders einfach und kostengünstig erreicht werden können.

Es ist von Vorteil, daß parallel zu dem ersten Verzögerungsglied mindestens ein zweites Verzögerungsglied mit einer zweiten Zeitkonstanten angeordnet ist, daß die Zeitkonstanten unterschiedlich sind und daß die Verzögerungsglieder über einen Mittelwertbildner mit dem Regler verbunden sind, weil somit auf besonders einfache und kostengünstige Weise unterschiedliche Zeitabhängigkeiten bei der Bewertung des Signals von dem Sonnensensor zur Anwendung gelangen können, wodurch unterschiedliche, sich auf die Veränderung der Innenraumtemperatur bei Sonneneinstrahlung auswirkende Effekte bei der Zuführung und Bearbeitung des Signals von dem Sonnensensor zu der Regelung berücksichtigt werden können. Bei Sonneneinstrahlung heizt sich der Fahrgastraum langsam auf. In diesem Fall kommt das Temperaturempfinden des Menschen zum Tragen. Die Innenraumtemperatur steigt an, da der Innentemperaturfühler von der Sonneneinstrahlung in der Regel nicht ausreichend miterwärmt wird, so daß auch das Zeitverhalten bei der Aufwärmung des Innenfühlers bei Sonneneinstrahlung mitberücksichtigt werden muß. Zudem muß das Zeitverhalten bei der Aufheizung des Fahrzeuginnenraums allgemein berücksichtigt werden. Aufgrund unterschiedlicher Zeitkonstanten der Verzögerungsglieder und einer anschließenden Mittelwertbildung kann somit ein Ausgangssignal gebildet werden, das der Regelung zugeführt wird, das alle Einflüsse mitberücksichtigt und somit bei allen Betriebsbedingungen des Kraftfahrzeugs eine bestmögliche Ausregelung des Einflusses von Sonneneinstrahlung auf die Regelung der Innenraumtemperatur ermöglicht wird.

Dadurch, daß der Mittelwertbildner sowohl über die Verzögerungsglieder als auch direkt mit dem Sonnensensor verbunden ist, kann insbesondere dem Klimaempfinden der Passagiere Rechnung getragen werden, da somit bei Schwankungen der Sonneneinstrahlung, das heißt, bei Sonnenintensitätssprüngen, das von der Bewertungseinrichtung gebildete Ausgangssignal dem Sprung bis zu einem gewissen Teil unverzögert und dann mit der Zeitkonstanten des Fahrzeuginnenraums bis zum Endwert folgt.

Die Zeitkonstanten sind dabei je nach der gewünschten Systemruhe für die Regelung und die gewünschte Regelcharakteristik in weiten Bereichen frei wählbar.

Es ist von Vorteil, daß der Sonnensensor eine Fotodiode ist, weil somit auf besonders einfache und kostengünstige Weise ein der Sonnenintensität proportionales Signal gebildet werden kann.

In diesem Zusammenhang ist besonders vorteilhaft, daß der Sonnensensor über einen Strom/Spannungswandler und einen Digital/Analog-Wandler mit der Bewertungseinrichtung verbunden ist, weil somit eine besonders einfache und kostengünstige Anpassung des Signals von der Fotodiode erreicht wird.

Ein besonders einfacher und kostengünstiger Aufbau des Mittelwertbildners ergibt sich, wenn der Mittelwertbildner aus einem Addierer und einem Teiler aufgebaut ist.

Es ist von Vorteil, daß der Digital/Analog-Wandler und/oder die Verzögerungsglieder und/oder der Addierer und/oder der Teiler Teile eines Mikrorechners sind, weil somit eine besonders einfache und kostengünstige Ausführungsform der Einrichtung möglich ist.

Ein Ausführungsbeispiel der erfindungsgemäßen Einrichtung zur Regelung der Innenraumtemperatur von Kraftfahrzeugen, ist in den Zeichnungen dargestellt und wird im folgenden anhand der Zeichnungen näher erläutert.

Es zeigen
Figur 1 ein Blockschaltbild der erfindungsgemäßen Einrichtung als Teilblockschaltbild,
Figur 2 ein Diagramm, das die Intensität (I) des Sonnensignals in Abhängigkeit von der Zeit und der verwendeten Filterzeitkonstanten darstellt.

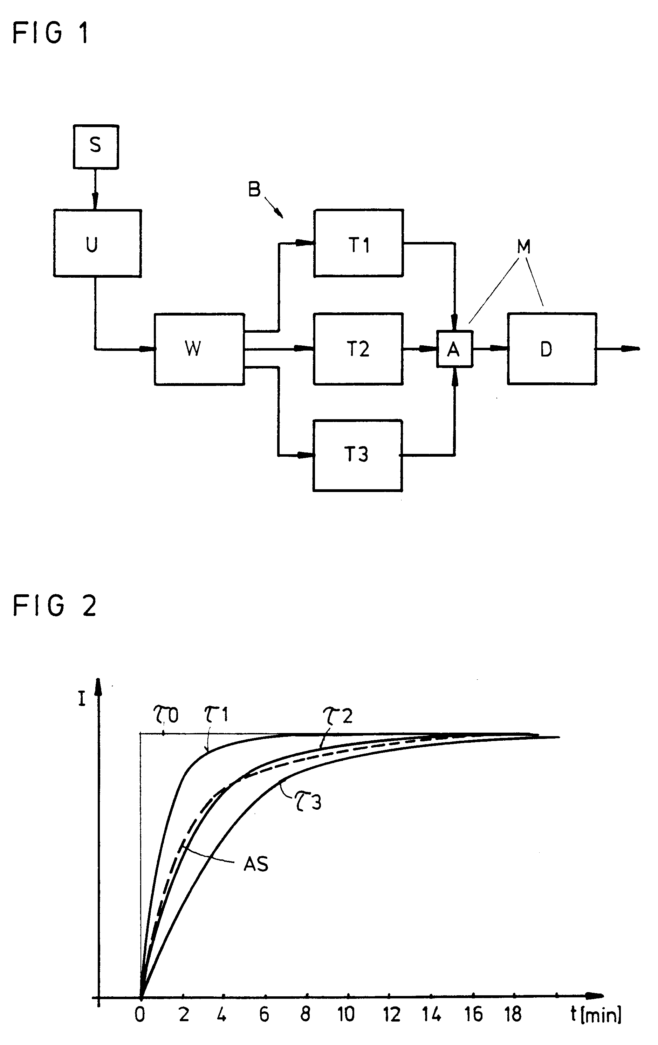

Figur 1 zeigt als Blockschaltbild einen Teil der Einrichtung zur Regelung der Innenraumtemperatur von Kraftfahrzeugen.

Ein Sonnensensor (S), der hier beispielhaft als eine Fotodiode ausgebildet ist, die bei dem Auftritt von Licht einen der Sonneneinstrahlung proportionalen Strom liefert, ist elektrisch leitend mit einem Strom/Spannungswandler (U) verbunden, der aus dem Strom von dem Sonnensensor (S) eine der gemessenen Sonnenintensität proportionale Spannung bildet. Der Strom/Spannungswandler (U) ist elektrisch leitend einem Analog/Digital-Wandler (W) verbunden, der die Spannungssignale von dem Strom/Spannungswandler (U) in digitale Signale umwandelt. Die resultierenden digitalen Signale sind dabei proportional zu der durch die Fotodiode gemessenen Sonnenintensität.

Da die Zeitkonstante der Hardware sich im Bereich von einigen Millisekunden befindet, würde das digitale Signal, das der Regelung zugeführt wird, viel zu schnell den auftretenden Schwankungen der Meßgröße, z. B. durch Bäume oder Häuser verursacht, folgen, so daß eine unkomfortable Regelung mit fehlender Systemruhe bei der direkten Auswertung der gebildeten, digitalen Signale durch die Regelung erreicht würde. Die Regelung der Innenraumtemperatur würde somit einen unruhigen Verlauf annehmen, da Störgrößen nicht herausgefiltert werden, so daß eine unkomfortable Regelung der Innenraumtemperatur erreicht wird.

Damit kurzzeitige Schwankungen in dem digitalen Signal von dem Analog/Digital-Wandler (W) herausgefiltert werden, ist in der Verbindung zwischen dem Analog/Digital-Wandler (W) und dem hier nicht gezeigten Regler eine Bewertungseinrichtung (B) angeordnet, die das Signal des Sonnensensors (S) verzögert der Regelung zuführt. Damit dies in Abhängigkeit von der thermischen Zeitkonstanten des Fahrgastraums und dem Klimaempfinden der Passagiere erfolgt, weist die Bewertungseinrichtung (B) mindestens ein Verzögerungsglied (T1) mit einer Zeitkonstanten (τ1) auf. Bei dem in Figur 1 gezeigten Ausführungsbeispiel sind beispielhaft drei Verzögerungsglieder (T1, T2, T3) parallel angeordnet und werden gleichzeitig von dem Signal von dem Analog/Digital-Wandler (W) beaufschlagt. Diese Verzögerungsglieder (T1, T2, T3) weisen unterschiedliche Zeitkonstanten (τ1, τ2, τ3,) auf, wodurch es ermöglicht wird, unterschiedliche Zeitkonstanten, die bei der Einstrahlung von Sonnenstrahlen auf das Kraftfahrzeug wirksam werden, zu berücksichtigen.

Diese zu berücksichtigenden Zeitkonstanten können z. B. durch das menschliche Empfinden durch die Art und Dauer der Aufheizung des Innenraumtemperaturfühlers bei Sonneneinstrahlung und durch das Zeitverhalten der Fahrzeuginnenraumaufheizung bei Sonneneinstrahlung gegeben sein.

Damit der Regelung von dem hier nicht gezeigten Regler ein Signal zugeführt werden kann, bei dem alle Effekte und Zeitkonstanten, die durch den Einfluß der Sonneneinstrahlung auf die Innenraumtemperatur entstehen können, bestmöglich ausgeglichen sind, sind die Verzögerungsglieder (T1, T2, T3) über einen Mittelwertbildner (M), der hier besonders einfach und kostengünstig aus einem Addierer (A) und einem Teiler (D) aufgebaut ist, mit dem Regler verbunden. Je nach der gewünschten Ausführungsform und der Art der Regelung können durch Parallelschaltung einer unterschiedlichen Anzahl von Verzögerungsgliedern (T1, T2, ...) unterschiedliche Regelkonzepte und Regelcharakteristiken erreicht werden.

Das bei dem hier gezeigten Ausführungsbeispiel an dem Ausgang des Multiplizierers (M) bzw. der Bewertungseinrichtung (B) anstehende Signal entspricht in der möglichen Amplitude dem Sonnensignal.

Dieses Signal wird bei der Regelung der Innenraumtemperatur mit dem Signal von einem hier nicht gezeigten Solltemperaturgeber mit den Signalen von mindestens einem Innen- und/oder Außentemperaturfühler und eventuell mit einem Lagesignal von einem Stellglied zur Beeinflussung der dem Innenraum zugeführten Wärmemenge verknüpft und dem Regler zugeführt, der das Stellglied ansteuert.

Figur 2 zeigt ein Diagramm, in dem die Intensität der Sonneneinstrahlung (I) in Abhängigkeit von der Zeit (t) und in Abhängigkeit von unterschiedlichen Zeitkonstanten (τ0, τ1 ...) dargestellt ist. Die Zeitachse (t) ist hierbei in Minuten geeicht.

Bei dem in Figur 1 gezeigten Ausführungsbeispiel werden beispielhaft drei parallel zueinander angeordnete Verzögerungsglieder (T1, T2, T3) verwendet, um drei Zeitkonstanten (τ1, τ2, τ3) für die Bildung eines Ausgangssignals (AS) durch Mittelwertbildung zu berücksichtigen. Wünscht man eine besonders konstante Regelung der Innenraumtemperatur unter möglichst guter Berücksichtigung der auftretenden Effekte durch die Sonneneinstrahlung, so kann, wie hier beispielhaft gewählt, die erste Zeitkonstante (τ1) etwa 1 Minute betragen, die zweite Zeitkonstante (τ2) etwa 2,5 Minuten betragen und die dritte Zeitkonstante (τ3) etwa 4 Minuten betragen. Durch die Mittelwertbildung des Mittelwertbildners (M) erhält man ein resultierendes Ausgangssignal (AS), das der Amplitude des Sonnensignals bestmöglich entspricht und sich bestmöglich für eine konstante Regelung der Innenraumtemperatur unter Berücksichtigung der auftretenden Effekte bei der Sonneneinstrahlung eignet. Je nach der gewünschten Regelcharakteristik, dem Zeitverhalten für die Fahrzeuginnenraumaufheizung bei Sonneneinstrahlung und/oder dem Zeitverhalten für die Erwärmung des Innenraumtemperaturfühlers und/oder bei besonderer Berücksichtigung des Klimaempfindens der Passagiere können die gewählten Zeitkonstanten (τ1, τ2, τ3) verkleinert oder vergrößert werden. Es können auch weitere Zeitkonstanten hinzugefügt werden, um das resultierende Ausgangssignal in eine gewünschte Richtung zu beeinflussen. Es kann z. B. gewünscht sein, daß bei kurzzeitigen Schwankungen des Sonnensignals, das heißt, bei Auftreten von Sprüngen in der Sonnenintensität, z. B. bei dem Vorbeifahren an Bäumen oder Häusern das menschliche Empfinden besonders berücksichtigt werden soll. Ist eine solche Regelcharakteristik gewünscht, so kann das Signal bis zu einem gewissen Teil unverzögert und dann mit der Zeitkonstanten der Fahrzeuginnenraumaufheizung bis zum Endwert aufgebaut werden. Hierbei kann beispielhaft dem Mittelwertbildner neben der Zuführung von Signalen über Verzögerungsglieder (T1, T2, T3 ...) oder auch ein einzelnes Verzögerungsglied (T1) das Signal von dem Sonnensensor, das heißt hier, von dem Analog/Digital-Wandler (W) direkt zugeführt werden. Ein solches Signal ist durch die Zeitkonstante (τ0) gekennzeichnet. Dieses Signal wurde in Figur 2 bei der Mittelwertbildung zum Erzeugen des Ausgangssignals (AS) nicht mitverwendet.

Sind der Analog/Digital-Wandler (W), die Verzögerungsglieder (T1, T2, T3, ...), der Addierer (A) und der Teiler (D) Teil eines Mikrorechners, so ergibt sich eine besonders einfache und kostengünstige Ausführungsform der Einrichtung zur Regelung der Innenraumtemperatur von Kraftfahrzeugen.

### Bezugszeichenliste

- A: Addierer
- AS: Ausgangssignal
- B: Bewertungseinrichtung
- D: Teiler
- I: Intensität
- M: Mittelwertbildner
- S: Sonnensensort
- t: Zeitachse
- T1: erstes Verzögerungsglied
- T2: zweites Verzögerungsglied
- T3: drittes Verzögerungsglied
- τ1: erste Zeitkonstante
- τ2: zweite Zeitkonstante
- τ3: dritte Zeitkonstante
- U: Strom/Spannungs-Wandler
- W: Digital/Analog-Wandler

## Patentansprüche

1. Einrichtung zur Regelung der Innenraumtemperatur von Kraftfahrzeugen, mit einem elektrischen Regler, der mit mindestens einem Innen- und/oder Außentemperaturfühler, mit einem Solltemperaturgeber, mit mindestens einem Sonnensensor (S) und mit mindestens einem Stellglied zur Beeinflussung der dem Innenraum zugeführten Wärmemenge verbunden ist, wobei der mindestens eine Sonnensensor (S) mit einer Bewertungseinrichtung (B) verbunden ist, die das Signal des Sonnensensors (S) verzögert der Regelung zuführt und die Bewertungseinrichtung (B) ein Verzögerungsglied (T1) mit einer Zeitkonstanten (τ 1) aufweist, dadurch gekennzeichnet, daß parallel zu dem ersten Verzögerungsglied (T1) mindestens ein zweites Verzögerungsglied (T2) mit einer zweiten Zeitkonstanten (τ2) angeordnet ist, daß die Zeitkonstanten (τ1, τ2 ...) unterschiedlich sind und daß die Verzögerungsglieder (T1, T2 ...) über einen Mittelwertbildner (M) mit dem Regler verbunden sind.

2. Einrichtung nach Anspruch 1, dadurch gekennzeichnet, daß der Mittelwertbildner (M) sowohl über die Verzögerungsglieder (T1, T2, ...) als auch direkt mit dem Sonnensensor (S) verbunden ist.

3. Einrichtung nach Anspruch 2, dadurch gekennzeichnet, daß der Sonnensensor (S) eine Fotodiode ist.

4. Einrichtung nach Anspruch 3, dadurch gekennzeichnet, daß der Sonnensensor (S) über einen Strom/Spannungswandler (U) und einen Digital/Analog-Wandler (W) mit der Bewertungseinrichtung (B) verbunden ist.

5. Einrichtung nach Anspruch 4, dadurch gekennzeichnet, daß der Mittelwertbildner (M) aus einem Addierer (A) und einem Teiler (D) aufgebaut ist.

6. Einrichtung nach Anspruch 5, dadurch gekennzeichnet, daß der Digital/Analog-Wandler (W) und/oder die Verzögerungsglieder (T1, T2, ...) und/oder der Addierer (A) und/oder der Teiler (D) Teile eines Mikrorechners sind.

## Claims

1. A device for controlling the cabin temperature of motor vehicles, comprising an electric regulator, which is connected to at least one inside- and/or outside temperature feeler, a nominal temperature controller, at least one sun sensor (S) and at least one control element to regulate the amount of heat fed into the cabin, and that the at least one sun sensor (S) is connected to an evaluation unit (B) which delivers the signal of the sun sensor (S) with a delay to the control, and the evaluation unit (B) comprises a delay element (T1) with a time constant (τ1), **characterized in that** parallel to the first delay element (T1) is at least one second delay element (T2) with a second time constant (τ2), and that the time constants (τ1, τ2 ...) are different and that the delay elements (T1, T2 ...) are connected to the regulator via an averaging device (M).

2. A device according to claim 1, **characterized in that** the averaging device (M) is connected to the sun sensor (S) by both the delay elements (TI, T2 ...) and directly.

3. A device according to claim 2, **characterized in that** the sun sensor (S) is a photo diode.

4. A device according to claim 3, **characterized in that** the sun sensor (S) is connected to the evaluation unit (B) via a current/voltage converter (U) and a digital/analog converter (U).

5. A device according to claim 4, **characterized in that** the averaging device (M) is composed of an adding unit (A) and a dividing unit (D).

6. A device according to claim 5, **characterized in that** the digital/analog converter (W) and/or the delay elements (T1, T2 , ...) and/or the adding unit (A) and/or the dividing unit (D) are part of a microprocessor.

## Revendications

1. Agencement pour la régulation de la température d'espace intérieur de véhicules automobiles, avec un régulateur électrique, qui est relié avec au moins un détecteur de température intérieure et/ou de température extérieure, avec un émetteur de température à atteindre, avec au moins un capteur de soleil (S) et avec au moins un organe de réglage pour l'influencement de la quantité de chaleur amenée à l'espace intérieur, le capteur de soleil précité (S) étant relié avec un agencement d'évaluation (B), qui amène le signal du capteur de soleil (S) retardé à la régulation, et l'agencement d'évaluation (B) présentant un organe de retardement (T1) avec une constante de temps (τ1), caractérisé en ce que, parallèlement au premier organe de retardement (T1), au moins un deuxième organe de retardement (T2) avec une deuxième constante de temps ( 2) est agencé, que les constantes de temps (τ1, τ2 ...) sont différentes et en ce que les organes de retardement (T1, T2 ...) sont reliés avec le régulateur par l'intermédiaire d'un dispositif de formation de valeur moyenne (M).

2. Agencement selon la revendication 1, caractérisé en ce que le dispositif de formation de valeurs moyennes (M) est relié, aussi bien par l'intermédiaire des organes de retardement (T1, T2, ...) que directement, avec le capteur de soleil (S).

3. Agencement selon la revendication 2, caractérisé en ce que le capteur de soleil (S) est une photodiode.

4. Agencement selon la revendication 3, caractérisé en ce que le capteur de soleil (S) est relié avec l'agencement d'évaluation (B) par l'intermédiaire d'un convertisseur courant/tension (U) et d'un convertisseur numérique/analogique (W).

5. Agencement selon la revendication 4, caractérisé en ce que le dispositif de formation de valeur moyenne (M) est constitué d'un dispositif additionneur (A) et d'un dispositif diviseur (D).

6. Agencement selon la revendication 5, caractérisé en ce que le convertisseur numérique/analogique (W) et/ou les organes de retardement (T1, T2, ...) et/ou le dispositif additionneur (A) et/ou le dispositif diviseur (D) sont des parties d'un microcalculateur.
